# FASCICULE DE BREVET EUROPEEN

(11) **EP 0 642 902 B1**
(45) Date de publication et mention de la délivrance du brevet: **08.07.1998**
(21) Numéro de dépôt: 94202456.3
(22) Date de dépôt: 29.08.1994
(51) Int. Cl.: B29B 17/02, B02C 18/44, B29B 13/10

(54) **Procédé et dispositif de traitement d'articles en matière plastique, et installation pour la récupération sélective de matières plastiques**
Verfahren und Vorrichtung zur Aufarbeitung von Kunststoffartikeln, und Anlage zur selektiven Rückgewinnung der Kunststoffabfälle
Method and apparatus for processing plastics-material articles, and plant for selective recovery of plastics waste

(30) Priorité: 08.09.1993 BE 9300932
(43) Date de publication de la demande: 15.03.1995
(73) Titulaire: DRAKA POLVA B.V., NL-1062 HM Amsterdam (NL)
(72) Inventeur: Berhaut-Streel, Jacques, NL-1625 PN Hoorn (NL)
(74) Mandataire: Dufrasne, Eugène

(56) Documents cités:
- EP-A- 0 249 094
- EP-A- 0 481 537
- DE-A- 1 964 111
- CAOUTCHOUCS ET PLASTIQUES, vol.68, no.702, Janvier 1991, PARIS FR pages 77 - 79 J.M. 'PERIPHERIQUES : LES BROYEURS A COUTEAUX - LE BROYAGE UN FACTEUR D'ECONOMIES'
- DATABASE WPI Section Ch, Week 9102, Derwent Publications Ltd., London, GB; Class AC, AN 91-012865 C02! & SE-A-8 901 207 (MASKIN AB RAPID) 6 Octobre 1990
- KUNSTSTOFFBERATER, vol.37, no.4, Avril 1992, ISERNHAGEN DE pages 70 - 72 HERBOLD GMBH 'MASCHINEN UND ANLAGEN ZUM ZERKLEINERN UND RECYCELN VON KUNSTSTOFFABFÄLLEN'
- CAOUTCHOUCS ET PLASTIQUES, vol.66, no.684, Janvier 1989, PARIS FR pages 73 - 74 'RECYCLAGE DES DECHETS PLASTIQUES'
- KUNSTSTOFFE, vol.80, no.8, Août 1990, MUNCHEN DE pages 883 - 884 DIPL.-ING. VIKTOR HESS 'ZERKLEINERN VON EXTRUDIERTEN ROHREN UND PROFILEN'
- PLASTIQUES MODERNES ET ELASTOMERES, vol.31, no.4, Mai 1979, PARIS FR pages 67 - 70 'REGENERATION : POR CHAQUE CAS UN MATERIEL SPECIFIQUE'

## Description

La présente invention concerne un procédé et un dispositif de traitement d'articles en matière plastique, en particulier d'articles de forme allongée tels que des tuyaux, permettant de réduire ces articles en fragments de petite taille, afin de trier ensuite ces fragments selon leur nature.

Le recyclage d'articles en matière plastique constitue de nos jours une activité particulièrement importante pour les producteurs de ces articles. L'un des problèmes qui se posent lors du recyclage est le triage des différentes matières plastiques recueillies; en effet, leurs possibilités de réutilisation sont directement liées à leur pureté, qui dépend directement de la qualité du triage.

Dans cette perspective, diverses solutions ont déjà été proposées. Ainsi, dans la demande de brevet NL 9101705, on décrit une installation de recyclage d'articles en matière plastique comprenant essentiellement un concasseur et un tamis. Le concasseur soumet les articles à traiter à des chocs violents, ce qui les réduit en morceaux d'autant plus petits que leur matériau constitutif est fragile. Un tamisage permet alors de trier les fragments selon leur taille et donc, indirectement, selon la nature du matériau constitutif de l'article traité.

Cette technique connue présente cependant de nombreux inconvénients. En effet, certaines matières plastiques, telles que notamment le caoutchouc, le polyéthylène (PE) et le polypropylène (PP), sont difficiles à concasser comparées à d'autres, telles que par exemple le poly(chlorure de vinyle) (PVC). Dans le cas d'articles en matière plastique peu fragile, par exemple dans le cas de tuyaux en polyéthylène, ce procédé connu fonctionne mal, et conduit rapidement au blocage du concasseur, qui ne parvient pas à briser les articles. Ce risque de blocage est notamment accru si les articles à traiter sont constitués d'une matière plastique renforcée au moyen de fibres de renforcement, par exemple de fibres de verre. On comprend dès lors que, pour qu'il fonctionne correctement, ce procédé connu doit nécessairement être précédé d'une étape préalable de tri manuel des articles, ce qui en constitue un désavantage important.

En outre, ce procédé connu est difficilement applicable à des articles de grandes dimensions : il est par exemple impossible d'introduire dans un concasseur de taille normale des tuyaux de 6 m de long, ce qui constitue cependant une longueur courante pour des tuyaux. Une étape préalable de tronçonnage des tuyaux est dans ce cas nécessaire, à moins d'utiliser un concasseur d'une taille hors du commun. Ces deux solutions sont peu avantageuses sur le plan économique.

Un désavantage additionnel de ce procédé connu est le niveau de bruit élevé qu'il génère.

La présente invention a dès lors pour objet de fournir un procédé et un dispositif de traitement d'articles en matière plastique permettant de traiter notamment des articles majoritairement constitués d'une matière plastique peu fragile, pouvant être appliquée à des tuyaux de grande longueur, et permettant de trier selon leur nature les matières plastiques ainsi recueillies en vue d'une réutilisation ultérieure.

De manière plus précise, la présente invention concerne un procédé de traitement d'articles en matière plastique en prévision du triage de ceux-ci, dans lequel on écrase lesdits articles puis on les tronçonne.

De préférence, les articles sont écrasés transversalement par rapport à leur plus grande dimension.

Par matière plastique, on entend désigner tout polymère et tout mélange de polymères, comprenant éventuellement un ou plusieurs additifs et/ou matériaux de renforcement. Les polymères visés peuvent aussi bien être thermodurcissables que thermoplastiques; parmi ces derniers, on peut notamment citer les polyoléfines, telles que le PP et le PE, et les polymères vinyliques, tels que le PVC. Par matières plastiques, on entend également désigner les polymères utilisés seuls ou de mélanges, ainsi que ceux qui contiennent des additifs tels que pigments, plastifiants, antioxydants, matières de charge, etc. Ces polymères peuvent également contenir des matériaux de renforcement, par exemple des fibres de verre ou de carbone.

Les articles visés peuvent avoir été réalisés à partir d'une ou plusieurs des matières plastiques susmentionnées par tout procédé de mise en oeuvre, par exemple par extrusion, coextrusion, calandrage, laminage, etc. Sans que ces exemples ne soient limitatifs, les corps creux, et tout particulièrement les tuyaux extrudés et coextrudés, constituent les types d'articles auxquels l'invention peut être appliquée avec un maximum d'avantages. L'invention s'applique avantageusement au traitement d'articles qui comprennent au moins un tuyau.

Rien ne s'oppose à ce que les articles ainsi traités comprennent plusieurs parties, constituées de matières plastiques identiques ou différentes; il peut par exemple s'agir de tuyaux en PE ou en PVC munis de joints constitués d'un élastomère tel que le caoutchouc.

La présente invention concerne également un dispositif de traitement d'articles en matière plastique comprenant une presse à effet latéral suivie d'une cisaille, dans lequel peut être réalisé le procédé selon l'invention. Cette presse à effet latéral et cette cisaille peuvent avantageusement être combinées en un appareil unique ("presse-cisaille").

La presse à effet latéral, connue dans son principe et décrite par exemple dans le document EP 481 537, comporte un bac longitudinal dans lequel on peut disposer, parallèlement à son axe longitudinal, un ou plusieurs articles de forme allongée tels que des tuyaux, ainsi qu'un ou plusieurs moyens latéraux de pressage permettant d'écraser ces articles latéralement, c'est-à-dire transversalement par rapport à leur plus grande dimension. Cet écrasement latéral peut être obtenu par l'application de forces agissant dans toute direction substantiellement perpendiculaire à l'axe longitudinal de la presse, par exemple par l'application de forces horizontales ou verticales. Ces forces latérales peuvent notamment être appliquées au moyen d'une ou plusieurs mâchoires s'étendant sur toute la longueur de la presse, parallèlement à son axe longitudinal. Chacune de ces mâchoires peut être articulée autour d'un axe, ou bien être conçue pour se déplacer parallèlement à elle-même à la manière d'un piston. Une presse munie de mâchoires articulées est particulièrement compacte, et donc avantageuse. Les forces latérales peuvent également être appliquées par un piston horizontal formant le côté supérieur du bac de la presse, à la manière d'un couvercle. Ces mâchoires et/ou pistons peuvent être actionnés par tout moyen connu tel que vérins hydrauliques, moteurs combinés ou non à des systèmes d'engrenages, etc.

Cet écrasement latéral a des conséquences différentes selon la nature des articles : les articles constitués de matières plastiques fragiles, telles que le PVC, se rompent (rupture fragile), alors que ceux constitués de matières plastiques non fragiles, telles que le PE, sont écrasés latéralement et ne se fracturent quasiment pas (déformation plastique). Ainsi, par exemple, des tuyaux en PVC se briseront généralement en donnant naissance à de nombreuses lamelles longues et étroites, alors que des tuyaux en PE s'écraseront sur eux-mêmes et ne présenteront que très peu de fractures.

Cette étape d'écrasement latéral a plusieurs avantages : ainsi, comme exposé ci-dessus, elle conduit soit à une fracture, soit à un écrasement, selon la nature des articles. Ensuite, elle permet de traiter des articles de grande section transversale, par exemple des tuyaux dont le diamètre est supérieur à la section d'entrée de la cisaille décrite ci-dessous. Elle permet en outre de traiter simultanément plusieurs articles. Par ailleurs, cette étape d'écrasement a comme conséquence avantageuse de détacher des articles traités une grande partie des souillures accumulées à la surface et à l'intérieur de ceux-ci (sable, terre, poussière, traces de liquides séchés, ...). La séparation des souillures ainsi détachées sera très aisée à réaliser par la suite, par exemple au moyen d'un tamis vibrant.

La presse comporte également des moyens de déplacement des articles, qui permettent de faire progresser ceux-ci en direction de la cisaille décrite ci-dessous. Ces moyens de déplacement peuvent par exemple consister en un piston perpendiculaire à l'axe de la presse et pouvant se déplacer parallèlement à celui-ci. Ce piston peut former l'un des côtés verticaux du bac de réception des articles.

La presse à effet latéral est immédiatement suivie d'une cisaille, généralement disposée dans l'axe de la presse. Par cisaille, on entend désigner un ou plusieurs couteaux dont au moins un est animé d'un mouvement dans un plan substantiellement perpendiculaire à l'axe de l'appareil. Ce mouvement peut notamment être un mouvement alternatif périodique de translation, le couteau se déplaçant dans son plan et parallèlement à lui-même, ou de rotation, le couteau pivotant autour d'un axe perpendiculaire à lui-même, de manière alternée ou continue.

Après l'étape d'écrasement latéral dans la presse, les moyens de déplacement des articles font progresser les articles écrasés en direction du ou des couteaux, qui les tronçonnent longitudinalement.

De même que l'écrasement latéral, ce tronçonnage n'a pas les mêmes conséquences pour toutes les matières plastiques : les matières plastiques fragiles telles que le PVC subissent une rupture fragile, alors que les matières plastiques non fragiles telles que le PE sont essentiellement coupées. La morphologie et la géométrie spécifiques des fragments de matière plastique fragile, notamment de PVC, pourra avantageusement être exploitée pour la récupération sélective de ces matières.

Contrairement au procédé connu décrit ci-dessus, utilisant un concasseur, il résulte de ce qui précède que la longueur des fragments recueillis à la sortie de la presse-cisaille utilisée dans la présente invention est strictement limitée; elle est en fait directement liée à la fréquence de fonctionnement de la cisaille et à la vitesse d'avancement longitudinal des articles. En pratique, la longueur des fragments est couramment de l'ordre de 5 à 50 cm, de préférence de 10 à 30 cm. Cette limitation de la longueur des fragments écarte tout risque de blocage du dispositif de l'invention ainsi que des éventuels appareillages disposés en aval de celui-ci, tels que ceux décrits ci-dessous.

Par ailleurs, utilisant uniquement des forces de compression et de découpage, et non de choc, ce procédé est d'une mise en oeuvre relativement silencieuse.

Avant d'écraser les articles transversalement par rapport à leur plus grande dimension et de les tronçonner, on peut les écraser parallèlement à cette dimension. Lorsque les moyens de déplacement des articles consistent en un piston situé à l'opposé de la cisaille, celui-ci peut servir à réaliser cet écrasement longitudinal, c'est-à-dire à soumettre les articles disposés dans le bac de la presse à une pression longitudinale, entre le piston d'une part et la cisaille (fermée) d'autre part, chacun de ces deux éléments étant disposés à une extrémité opposée du bac. Pour éviter que les couteaux de la cisaille ne soient soumis à des forces latérales excessives, qui risqueraient de les endommager, on peut prévoir, à l'extrémité du bac de la presse, immédiatement devant la cisaille, une plaque verticale, épaisse et amovible pouvant jouer un rôle de butée lors de la compression longitudinale des articles. Sous l'effet de cette pression longitudinale, les articles constitués d'une matière plastique fragile telle que le PVC éclatent, alors que ceux constitués d'une matière plastique non fragile telle que le PE sont simplement déformés, élastiquement et/ou plastiquement, dans la direction longitudinale. Cette étape préliminaire de compression longitudinale permet de réduire le travail que doit ensuite fournir la cisaille.

Comme exposé précédemment, la combinaison d'une presse et d'une cisaille telles que décrites ci-dessus est particulièrement avantageuse dans une installation de récupération sélective de matières plastiques, comprenant un dispositif de triage. En effet, l'écrasement et le tronçonnage décrits ci-dessus produisent des fragments de matière plastique qui se prêtent particulièrement bien à des étapes ultérieures ayant pour but le triage des matières plastiques selon leur nature, et tout particulièrement la récupération sélective du PVC. Un exemple de telle étape ultérieure est le tamisage sélectif, qui permet d'aisément séparer matières plastiques fragiles et peu fragiles, en raison de la différence de taille des fragments recueillis après écrasement et tronçonnage. Un autre exemple de telle étape ultérieure est le concassage et/ou la micronisation, qui produisent des fragments de matière plastique de petites dimensions, typiquement de l'ordre du centimètre ou même du millimètre, fragments qui peuvent ensuite être séparés par des méthodes physico-chimiques telles que la flottation ou la séparation électrostatique.

L'invention concerne dès lors aussi une installation pour la récupération sélective des matières plastiques, comprenant un dispositif conforme à l'invention.

L'installation selon l'invention comprend généralement, en aval de la presse à effet latéral et de la cisaille décrites ci-dessus, une ou plusieurs autres "cellules" de traitement, les fragments de matière plastique étant transportés de l'une à l'autre par des moyens conventionnels de transport, par exemple par des tapis roulants.

Un premier type de telle cellule de traitement consiste en un tamis vibrant permettant d'éliminer les petites particules telles que poussière, terre ou sable qui pourraient adhérer aux fragments recueillis à la sortie de la cisaille. Un tel tamis vibrant est avantageusement disposé à la suite de la cisaille. Un ou plusieurs tamis vibrants supplémentaires peuvent en outre être disposés à d'autres endroits de l'ensemble du dispositif.

Un second type de telle cellule de traitement, avantageusement disposé à la suite d'un tamis vibrant placé à la sortie de la cisaille, consiste en une bande transporteuse sur laquelle défilent les fragments et où ceux-ci subissent une inspection visuelle, lors de laquelle les corps étrangers sont séparés des fragments de matières plastiques recyclables. Ces corps étrangers sont notamment des boulons, inserts, joints, etc. que leur nature exclut du procédé de recyclage. Cette inspection visuelle peut être réalisée par un opérateur humain ou de manière automatique, par exemple au moyen d'une caméra associée à un système de reconnaissance d'images et à un ou plusieurs bras robotisés permettant l'enlèvement des objets considérés comme gênants pour la suite du recyclage. Dans le cas de tuyaux munis de joints perpendiculaires à leur axe, il est à noter que la structure de la presse et de la cisaille est telle que ces joints ne sont généralement pas brisés, ce qui facilite leur identification et leur enlèvement.

Un troisième type de cellule de traitement consiste en une cellule de récupération des matériaux ferromagnétiques, au moyen d'un champ magnétique produit par un ou plusieurs électro-aimants.

Un autre type de cellule de traitement consiste en un concasseur. Ce concasseur peut être de tout type, par exemple un modèle rotatif dans lequel les fragments à concasser sont projetés à grande vitesse contre ses parois. Ce concasseur peut être de dimensions modestes, étant donné que les fragments qui y sont introduits possèdent, comme exposé précédemment, des dimensions strictement limitées, de quelques dizaines de centimètres tout au plus. Cette situation contraste avec le procédé antérieur décrit plus haut, qui nécessitait l'utilisation d'un concasseur gigantesque, où puissent être introduits tout entiers les articles à traiter. Les fragments produits par le concasseur sont généralement de petites dimensions, par exemple de l'ordre du centimètre.

Un autre type de cellule pouvant être utilisée, disposée en aval d'un éventuel concasseur, consiste en un broyeur à couteaux ou microniseur, qui réduit les fragments concassés en une poudre de fine granulométrie, par exemple d'un diamètre moyen ne dépassant pas quelques millimètres.

L'installation selon l'invention peut avantageusement comprendre, outre la presse et la cisaille, un concasseur et/ou un microniseur.

Le triage des matières plastiques selon leur nature peut intervenir de différentes façons et à différentes étapes de l'ensemble du traitement. Ainsi, le triage peut se faire par inspection visuelle, humaine ou automatique, en se basant sur la morphologie de rupture et la géométrie des fragments à la sortie de la cisaille, clairement différentes pour le PVC et le PE, par exemple. Le triage peut encore se faire par tamisage, à la sortie de la cisaille, sur base de la différence de taille des fragments. Il peut aussi s'effectuer après concassage et micronisation éventuelle, par des procédés physico-chimiques tels que la flottation ou la séparation électrostatique.

Les figures annexées illustrent, de façon non limitative, différentes variantes de réalisation du dispositif de l'invention.

La figure 1 représente en coupe un type particulier de presse conforme à l'invention, dans laquelle ont été déposés des articles à traiter.

La figure 2 représente la presse de la figure 1 après que les articles qu'elle contient aient été écrasés latéralement.

La figure 3 représente, en perspective et schématiquement, une variante particulière de presse-cisaille conforme à l'invention.

La figure 4 représente schématiquement une installation pour la récupération sélective des matières plastiques conforme à l'invention.

Dans ces figures, des numéros de référence identiques désignent des éléments identiques.

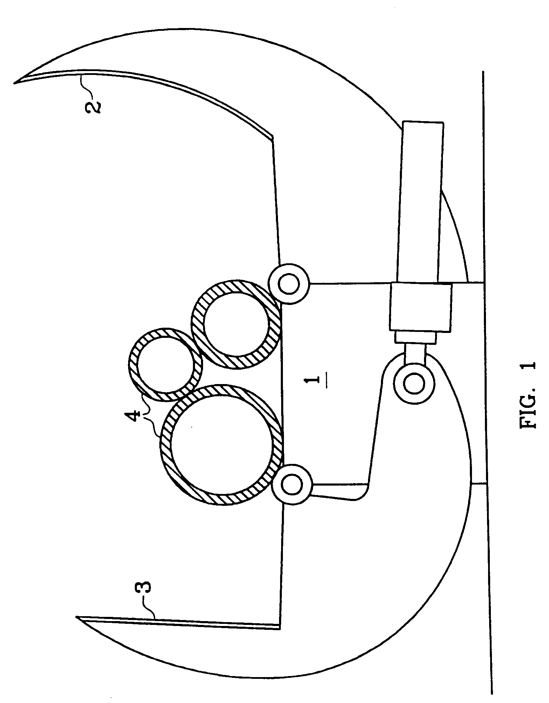

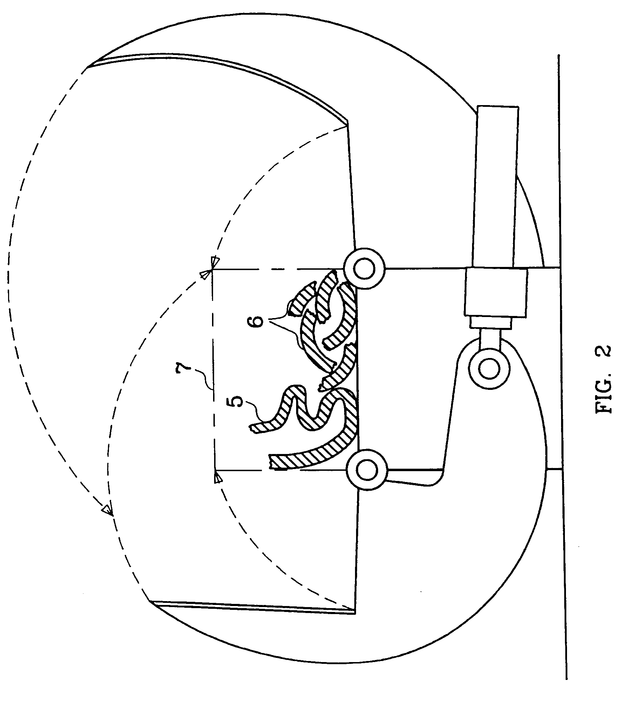

La presse représentée aux figures 1 et 2 comprend un bâti allongé (1) sur toute la longueur des côtés duquel sont articulées deux mâchoires (2, 3). Sur la figure 1, les mâchoires de la presse sont ouvertes, et on a déposé, dans le bac qu'elles et le bâti de la presse forment, trois tuyaux (4) à traiter.

La figure 2 représente la situation après écrasement latéral et réouverture des mâchoires : les mâchoires (2, 3) se sont refermées de manière à venir épouser les limites du rectangle (7) représenté en traits mixtes, avec comme conséquence l'écrasement des tuyaux. On distingue sur la figure 2 un tuyau déformé plastiquement (5) ainsi que des fragments de tuyaux victimes d'une rupture fragile (6).

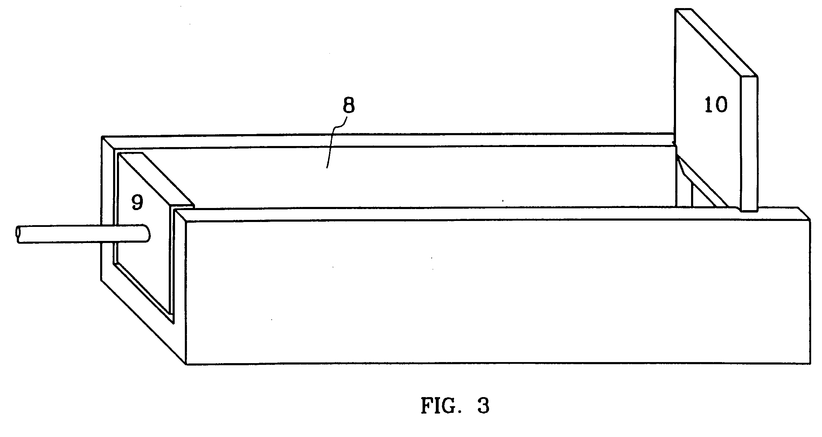

Sur la figure 3, on distingue une presse combinée à une cisaille, c'est-à-dire une presse-cisaille, conforme à l'invention. La presse est ici d'un modèle autre que celui représenté aux figures 1 et 2 : elle se résume à un simple bac allongé (8), dont une extrémité est fermée par un piston vertical (9) destiné au déplacement des articles disposés dans le bac (8), ce piston pouvant se déplacer parallèlement à l'axe longitudinal du bac (8) sous l'effet d'un vérin hydraulique classique (non représenté), et dont l'autre extrémité est fermée par une cisaille comprenant une lame verticale unique (10), pouvant se déplacer dans un plan vertical sous l'effet d'autres moyens hydrauliques classiques (non représentés). Les moyens d'écrasement latéral qui n'ont pas été représentés, consistent ici en un piston horizontal, d'axe vertical, fermant le côté supérieur du bac (8) une fois que celui-ci a été rempli des articles à traiter, et destiné à exercer une pression verticale sur ces articles.

Après avoir disposé les articles à traiter dans le bac (8) et refermé le "couvercle" que constitue le piston horizontal, mais avant que ce dernier n'écrase latéralement (verticalement) les articles, on actionne le piston vertical (9) de manière à comprimer longitudinalement les articles, ce qui en brisera ceux constitués d'une matière plastique fragile.

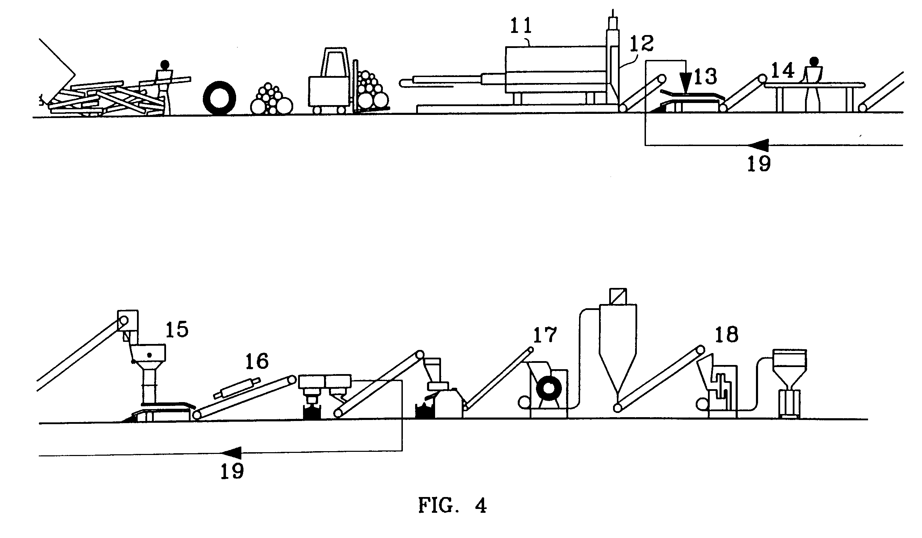

La figure 4 schématise une configuration particulière d'installation complète de recyclage de tuyaux en matière plastique; la partie inférieure de la figure représente la seconde moitié de l'installation, qui prend place à la droite de la première moitié, représentée à la partie supérieure de la figure. Après déchargement (à gauche de la partie supérieure de la figure 4), les tuyaux subissent un écrasement longitudinal puis latéral dans une presse (11) conforme à l'invention, puis sont tronçonnés par une cisaille conforme à l'invention (12). Les fragments de matière plastique ainsi obtenus sont débarrassés de la plupart des impuretés telles que sable, terre, etc. par un tamis vibrant (13), avant de passer sur un tapis roulant (14) où ils sont soumis à une inspection visuelle afin d'en retirer les corps étrangers impropres au recyclage. Les fragments sont alors conduits dans un concasseur (15), et les fragments concassés ainsi obtenus, d'une taille de l'ordre du centimètre, passent sous un électro-aimant (16) afin d'en retirer d'éventuels corps étrangers ferromagnétiques, tels que des inserts. Après une étape de tamisage sélectif permettant de réappliquer les étapes précédentes, et en particulier le concassage, aux fragments insuffisamment petits, comme symbolisé par la flèche (19), les autres fragments concassés sont transférés dans un broyeur (17) puis dans un microniseur (18). Les fines particules de matière plastique ainsi obtenues sont alors triées dans un séparateur électrostatique (non représenté).

## Revendications

1. Procédé de traitement d'articles en matière plastique en prévision du triage de ceux-ci, caractérisé en ce qu'on écrase lesdits articles puis on les tronçonne.

2. Procédé selon la revendication 1, caractérisé en ce qu'on écrase les articles transversalement par rapport à leur plus grande dimension.

3. Procédé selon la revendication 2, caractérisé en ce que, avant d'écraser les articles transversalement par rapport à leur plus grande dimension et de les tronçonner, on les écrase parallèlement à cette dimension.

4. Procédé selon l'une quelconque des revendications précédentes, caractérisé en ce que les articles comprennent au moins un tuyau.

5. Dispositif de traitement d'articles en matière plastique comprenant une presse à effet latéral suivie d'une cisaille.

6. Dispositif selon la revendication 5, caractérisé en ce que la presse comporte des mâchoires s'étendant sur toute la longueur de la presse, parallèlement à son axe longitudinal.

7. Dispositif selon la revendication 5 ou 6, caractérisé en ce que la presse et la cisaille sont combinées en un appareil unique.

8. Dispositif selon l'une quelconque des revendications 5 à 7, caractérisé en ce que la presse comprend un piston perpendiculaire à son axe, pouvant se déplacer parallèlement à celui-ci.

9. Installation pour la récupération sélective de matières plastiques, caractérisée en ce qu'elle comprend un dispositif selon l'une quelconque des revendications 5 à 8.

10. Installation selon la revendication 9, caractérisée en ce qu'elle comprend en outre, en aval d'un éventuel concasseur, un broyeur à couteaux ou microniseur.

11. Installation selon la revendication 9 ou 10, caractérisée en ce qu'elle comprend en outre un séparateur de matières plastiques à flottation ou électrostatique.

## Claims

1. Method for processing plastic articles with the expectation of classifying them, characterized in that the said articles are squashed and then cut up.

2. Method according to Claim 1, characterized in that the articles are squashed transversely in relation to their largest dimension.

3. Method according to Claim 2, characterized in that, before squashing the articles transversely in relation to their largest dimension and cutting them up, they are squashed parallel to this dimension.

4. Method according to any one of the preceding claims, characterized in that the articles comprise at least one pipe.

5. Device for processing plastic articles, comprising a side-acting press followed by a shear.

6. Device according to Claim 5, characterized in that the press includes jaws extending over the entire length of the press, parallel to its longitudinal axis.

7. Device according to Claim 5 or 6, characterized in that the press and shear are combined into a single apparatus.

8. Device according to any one of Claims 5 to 7, characterized in that the press comprises a piston perpendicular to its axis, which can move parallel to the latter.

9. Installation for the selective recovery of plastics, characterized in that it comprises a device according to any one of Claims 5 to 8.

10. Installation according to Claim 9, characterized in that it furthermore comprises, downstream of a possible crusher, a grinder with cutters, or micronizer.

11. Installation according to Claim 9 or 10, characterized in that it furthermore comprises a flotation or electrostatic separator of plastics.

## Patentansprüche

1. Verfahren zur Behandlung von Gegenständen aus Kunststoff in Voraussicht von deren Sortierung, dadurch gekennzeichnet, dass man die besagten Gegenstände zerdrückt und sie dann in Stücke zerteilt.

2. Verfahren nach Anspruch 1, dadurch gekennzeichnet, dass man die Gegenstände quer zu ihrer größten Abmessung zerdrückt.

3. Verfahren nach Anspruch 2, dadurch gekennzeichnet, dass man vor dem Zerdrücken der Gegenstände quer zu ihrer größten Abmessung und ihrem Zerteilen in Stücke sie parallel zu dieser Abmessung zerdrückt.

4. Verfahren nach einem beliebigen der vorangehenden Ansprüche, dadurch gekennzeichnet, dass die Gegenstände mindestens ein Rohr umfassen.

5. Vorrichtung zur Behandlung von Gegenständen aus Kunststoff, umfassend eine Presse mit seitlicher Einwirkung, gefolgt von einer Schere.

6. Vorrichtung nach Anspruch 5, dadurch gekennzeichnet, dass die Presse Backen aufweist, die sich parallel zu ihrer Längsachse über die gesamte Länge der Presse erstrecken.

7. Vorrichtung nach Anspruch 5 oder 6, dadurch gekennzeichnet, dass die Presse und die Schere in einem einzigen Gerät kombiniert sind.

8. Vorrichtung nach einem beliebigen der Ansprüche 5 bis 7, dadurch gekennzeichnet, dass die Presse einen Kolben umfasst, der senkrecht zu ihrer Achse ist, wobei er sich parallel zu dieser verschieben kann.

9. Anlage zur selektiven Rückgewinnung von Kunststoffen, dadurch gekennzeichnet, dass sie eine Vorrichtung nach einem beliebigen der Ansprüche 5 bis 8 umfasst.

10. Anlage nach Anspruch 9, dadurch gekennzeichnet, dass sie außerdem hinter einem etwaigen Brecher einen Schneidgranulator oder Micronizer umfasst.

11. Anlage nach Anspruch 9 oder 10, dadurch gekennzeichnet, dass sie außerdem einen Flotations- oder elektrostatischen Kunststoffabscheider umfasst.
